Europäisches Patentamt

European Patent Office

Office européen des brevets

(19)

(11) EP 0 697 582 A2

(12) EUROPEAN PATENT APPLICATION

(43) Date of publication:
21.02.1996 Bulletin 1996/08

(51) Int Cl.6: **G01F 1/10**, G01F 15/00, G01F 15/04

(21) Application number: 95305095.2

(22) Date of filing: 19.07.1995

(84) Designated Contracting States:
**BE DE ES FR GB IT NL SE**

(30) Priority: **22.07.1994 GB 9414864**
**28.02.1995 GB 9504007**

(71) Applicant: **British Gas plc**
**London SW1V 3JL (GB)**

(72) Inventors:
• **Mangeolles, Nicholas Anthony**
**Leichester, Leichestershire (GB)**
• **Shiret, Alan Reginald**
**Nottingham, Notts, NG2 5HR (GB)**

(74) Representative: **Morgan, David James**
**London W1A 2AZ (GB)**

(54) **Apparatus for measuring the flow rate of a fluid**

(57) Apparatus is provided for measuring the flow rate of a fluid, particularly warm air, issuing from an opening, for instance a grille, in a duct such as a warm air duct in a warm air central heating system. The apparatus comprises an open-ended container divided into two similar cuboid compartments, the container in use being located by one end over the duct opening so that the fluid can flow through the container by means of its ends. Means such as a volumetric flow rate indicator are provided within the container to measure the rate of flow of fluid through the container and means in the form of a fan are provided to reduce to zero any positive pressure in the container when it is placed over the duct.

FIG.1.

## Description

This invention relates to apparatus for measuring the flow rate of a fluid issuing from an opening in a duct carrying the fluid and is particularly though not exclusively concerned with the measurement of the flow rate of warm air through a grille in a warm central heating system with a view to determining the heat output of the air.

In a warm air central heating system for a house, for example, the warm air is supplied to each room via a duct which terminates in a grille usually at floor level or in a portion of the wall close to the floor through which grille the air issues into the room. A room may be provided with two or more such ducts and associated grilles depending on the usual heat output demanded for that room.

When installing a new system, it is essential to be able accurately to measure the heat output through the or each grille. Once this is known, the system can be balanced to ensure that each room in the house is receiving the appropriate amount of heat.

It is known to measure the heat output of air through each grille by measuring the rate of air flow through the grille from the duct and the temperature of the air leaving the grille and performing the appropriate calculations to determine the heat output of the air.

A device is provided for measuring the flow rate of warm air through a grille. The device consists of an open-ended cone which, in use, is placed large diameter end over the grille. The air is funnelled towards the narrow diameter end in which there is located an anemometer type device which provides a direct reading of the total flow of the air through the grille opening.

While this device provides results which are accurate enough to enable the system to be balanced, they are not accurate measurements in themselves. This is because when the cone is placed over a grille, the air is constricted as it flows into the funnel and this causes the pressure of the air upstream of the grille (i.e. within the duct) to rise. This increase in the duct air pressure opposes the flow of air which will then upset the flow distribution around the system and cause it to become unbalanced. Therefore the values of flow rate measured by this device will be lower than the actual flow rates because the measurement device has itself altered the readings.

It is therefore an object of the present invention to provide apparatus for measuring the flow rate of warm air issuing from an opening in a duct carrying the air which apparatus overcomes the problems of the above described device.

According to the present invention, apparatus for measuring the flow rate of a fluid issuing from an opening in a duct carrying fluid comprises an open-ended container for location by one end over the duct opening so that fluid can flow through the container by way of the ends, means within the container for measuring the rate of flow of fluid through the container and means for reducing fluid pressure within the container while fluid is flowing through the container.

The means for reducing fluid pressure within the container is preferably adapted to reduce the pressure substantially to atmospheric and the means may be a fan for aiding the flow rate of fluid through the container thereby to reduce the pressure in the container.

Means are suitably provided to measure the pressure and means are also provided to adjust the fan speed to maintain the pressure substantially at atmospheric.

The means for measuring the rate of fluid through the container is conveniently an anemometer preferably a vane anemometer.

Suitably the pressure measuring means is a manometer.

Conveniently the pressure reducing means is situated between the ends of the container.

Preferably a first temperature measuring means is situated adjacent to the fluid flow rate measuring means and suitably a second temperature measuring means is located adjacent an inlet end of the container.

In one embodiment of the invention, the container comprises a chamber divided by a wall into two communicating compartments with one compartment providing an inlet end and the other compartment an outlet end with the fluid flow rate measuring means located adjacent an opening in the dividing wall. In this case the compartments may comprise two substantially similarly sized cuboid chambers.

An embodiment of the invention will now be particularly described with reference to the drawings in which:-

Figure 1 is an isometric view from above and at a long edge of the container, partly broken away to reveal the internal components,

Figure 2 is a schematic view along one side of the container,

Figure 3 is a schematic view along another side of the container at right angles to the side in Figure 2 and only the upper part thereof,

Figure 4 is an isometric view of the exterior of another embodiment of the invention, and

Figure 5 is an isometric view of a mouth part of a further embodiment of the invention.

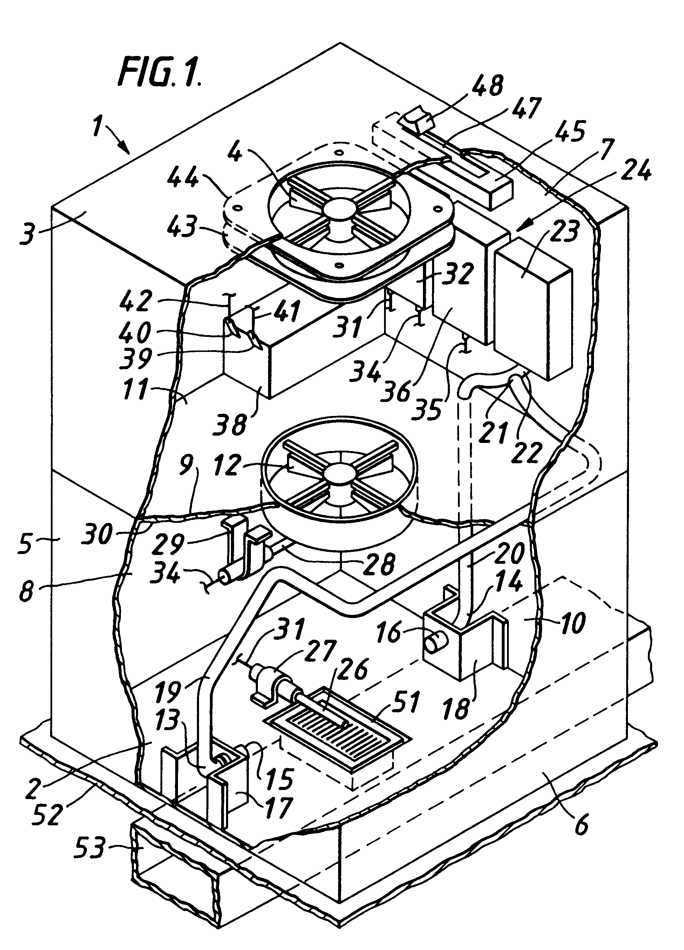

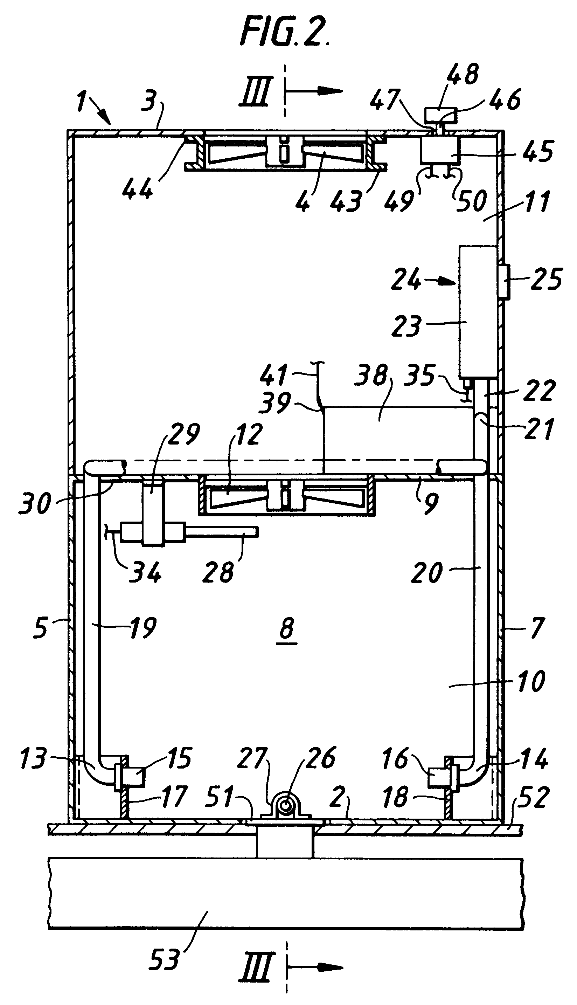

Referring to Figures 1 and 2, the measuring apparatus comprises a box-like container 1 having a first lower end 2 having an opening therein serving as an air inlet, a second upper end 3, formed in part by a fan 4, serving as an air outlet and four adjoining side walls 5 to 8 forming an enclosure.

The container 1 is divided by a partition 9 into two similarly sized cuboid compartments 10 and 11, there being mounted on the partition 9 a known-type vane anemometer 12. The partition 9 has an opening (not shown) over which the anemometer 12 is mounted so that air entering the lower compartment 10 can reach the upper compartment 11 by way of the anemometer 12.

The pressure within the container 1 is sensed by two pressure tappings 13 and 14, the inlets 15 and 16 of which (see Figure 2) terminate adjacent to the lower end 2 of the container 1, the tappings 13 and 14 facing each other. The inlets 15 and 16 are secured to their respective side walls 5 and 7 by clips 17 and 18 which are secured to the respective inside surface of the walls 5 and 7. Each inlet 15, 16 extends into the container 1 via an aperture in its respective clip 17 and 18.

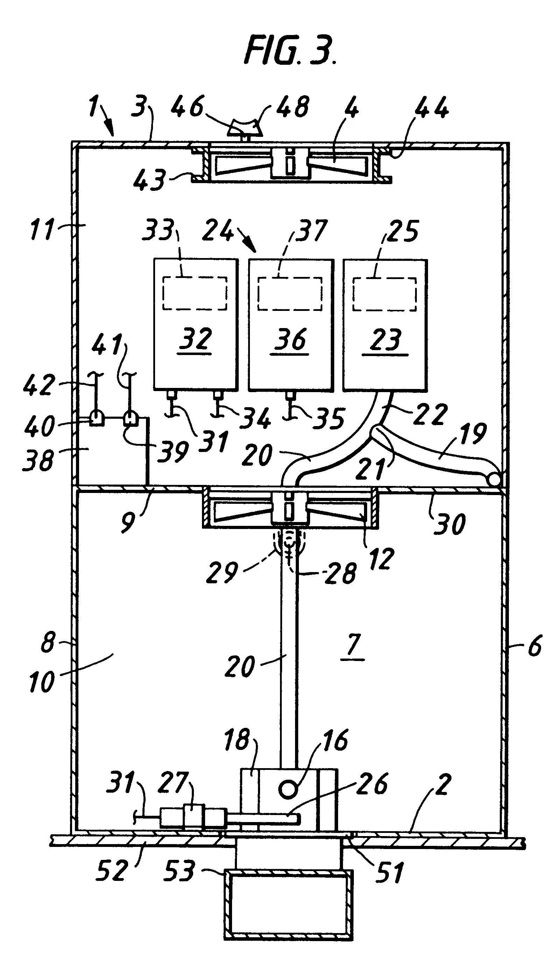

Each tapping has a flexible pipe 19 and 20 which are shown most clearly in Figure 1 and which extend up their respective side wall. Pipe 19 after passing through a hole in the partition 9, traverses across the partition 9 and adjoins the other pipe 20 at a junction 21, the pipe 20 also extending through a hole in the partition. The unified pipes 22 then lead into a digital micromanometer 23 mounted on the inside of the side wall 7 in a mounting box 24 in the upper compartment of the container 1 as shown in Figure 3, the manometer face 25 being visible from the outside via a slot in the wall 7.

A first temperature measuring means in the form of a temperature probe 26 is located adjacent to and extending into the opening in the lower end 2 of the container 1. This probe 26 is clipped by clip 27 to the inside floor of this end 2.

A second temperature measuring means in the form of a temperature probe 28 is located adjacent to and extending into the opening in the partition 9 and the probe 28 is clipped by clip 29 to the underneath surface 30 of the partition 9.

As shown in Figures 1 and 3 a lead 31 from probe 26 extends upwardly through the partition 9 and into a digital thermometer 32 mounted on the inside of side wall 7 in the mounting box 24, the thermometer 32 having a face 33 visible from the outside via a slot in the wall 7. Similarly a lead 34 from the probe 28 extends across the underface of the partition 9 and thence upwardly through the partition 9 until the lead 34 enters the digital thermometer 32. The thermometer 32 displays the individual temperature readings of each probe.

A lead 35 also extends from an electrical output of the vane anemometer 12 along the underside of and then through the partition 9 and into a volumetric flow rate indicator 36 also mounted in the mounting box 24 between the micromanometer 23 and the thermometer 32. As with the manometer 23 and the thermometer 32, the volumetric flow rate indicator 36 has a face 37 which is visible from outside the container 1 by way of a slot in the wall 7.

A battery 38 is mounted on the upper surface of the partition 9 to power the fan 4, the terminals 39, 40 of the battery 38 being connected by two leads 41, 42 extending upwardly to connect with the respective fan terminals (not shown).

The fan 4 itself is housed between two flanges 43, 44 and lies adjacent an opening in the upper end 3 of the container 1. The fan 4 is mounted to the internal surface of the upper end 3 by means of the upper flange 44 which is bolted or rivetted to the upper end 3 of the container 1.

The speed of the fan 4 is controlled by a manually controlled slide type rheostat 45 mounted on the internal surface of the upper end 3 of the container 1. As an alternative the rheostat could be replaced by a ten-turn dial potentiometer. The slide spindle 46 (Figures 2 and 3) projects through an elongate slot 47 (Figure 1) in the upper end 3 of the container and terminates in a button 48 which can be manually moved to move the spindle 46 along the slot 47. A pair of leads 49, 50 (Figure 1) connects the rheostat windings (not shown) to the fan motor (not shown) in an appropriate and well known way to permit the speed of the fan 4 to be selected at any value between zero and maximum by moving the spindle 46 to a desired position along the slot 47.

In use, as shown in Figure 1, the lower end 2 of the container 1 is located over a suitable grille 51 mounted in a floorboard 52 and supplied with warm air via a suitable duct 53 only part of which is shown. As shown the wall of the container 1 surrounds the grille 52 with clearance and ideally for high accuracy the container 1 should form a seal with the floor.

The slight internal positive pressure produced is measured by the manometer 23 and the temperature of the warm air produced by the two probes 26 and 28 is read by the thermometer 32.

The speed of the fan 4, which speed initially is zero, is increased to aid the flow of air through the grille 52. This action reduces the positive back pressure in the container 1 and eventually cancels it out altogether when the fan speed is high enough. At this stage, the pressure reading on the manometer 23 will be zero. It is important to monitor the pressure continually while the fan speed is being adjusted so as not to cause the pressure to undershoot. When the pressure in the container 1 is zero the flow rate of the air leaving the grille 52 is identical to that when the apparatus is absent.

At this stage the volumetric flow rate of the air can be read off from the indicator 36.

The apparatus can be used to measure the mass flow rate of the air as well as or instead of the volumetric flow rate. Here the temperature recorded by probe 28 is measured and from it the density of the air found and multiplied by the volumetric flow rate to give the mass flow rate of the air.

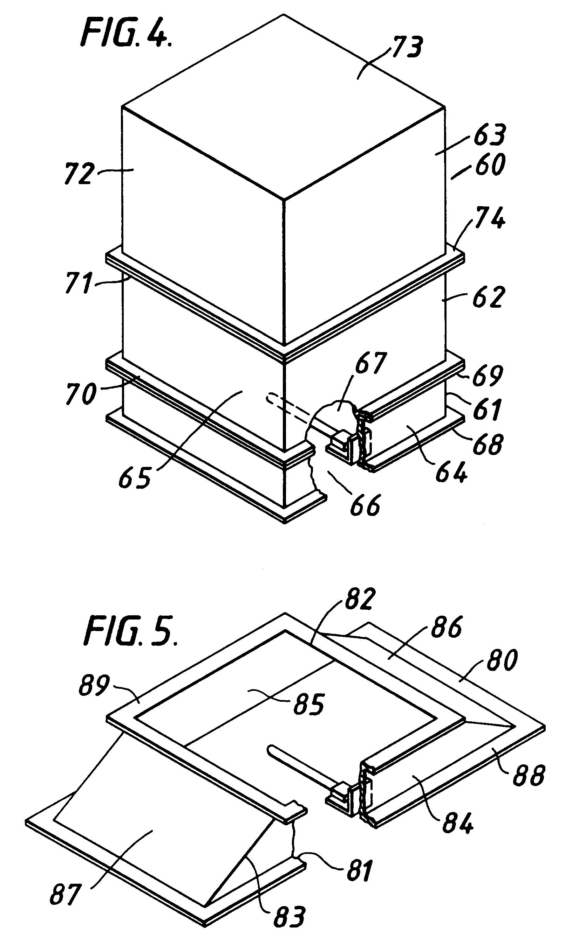

Referring to Figure 4 the container 60 in this embodiment comprises three interconnected parts 61, 62 and 63.

Parts 61 and 62 each comprise vertical walls 64 and 65 in the shape of a rectangle forming open ended chambers 66 and 67. Provided on the lowermost and uppermost ends respectively of the walls 64 and 65 are circumferentially disposed flanges 68, 69, 70, 71.

Part 63 also comprises a rectangular wall 72 but in part 63 the upper end of the chamber so formed is closed by a top wall 73. On the lowermost end of wall 72 there is provided a flange 74.

Parts 61 and 62 are releasably connected together by the flanges 69 and 70 while parts 62 and 63 are releasably connected together by flanges 71 and 74.

In this way the container 60 may be disassembled for cleaning and servicing.

Referring to Figure 5, here the lowermost part equivalent to part 61 of Figure 4 is a part 80 which has a mouth end 81 and a throat end 82 formed by a wall 83 which has two opposite vertical portions 84 and 85 and two opposite other portions 86 and 87 which are angled outwardly and downwardly from the throat end 82 to the mouth end 81 to provide the mouth with an open area which is greater than that of the throat. Otherwise the part 80 has a lowermost flange 88 and an uppermost flange 89 which in use is connected to the intermediate part 62 (see Figure 4). In addition and otherwise the container of Figure 5 would comprise the other parts 62 and 63 (not shown).

A container comprising the part 80 would provide measurement with a variety of grille sizes.

The apparatus can also be used as a heat meter so that it can measure the heat power being emitted from a grille into a room. In order to measure the heat output, measurements are made of the mass flow rate, the specific heat of the air and the temperature differential between the air as it leaves the grille and the ambient air in the room. Therefore three temperature probes are required; one just below the vane anemometer (probe 28), one at the grille face (probe 26) and one (not shown) in the room. The mass flow rate can be calculated as described above, the temperature of the air at this stage also being used to find the specific heat from tables. Then the formula below is used:-

$$\text{Heat Output} = M.Cp.\ T$$

where

M = Mass flow rate

Cp = Specific heat

T = Differential temperature

It would be possible to automate calculations of the mass flow rate and heat output by providing a microcomputer with an appropriate microchip and inputs for signals from the volumetric flow rate indicator and the three temperature sensors, one of which would be mounted in the room.

**Claims**

1. Apparatus for measuring the flow rate of a fluid issuing from an opening in a duct carrying the fluid, the apparatus comprising an open-ended container for location by one end over the duct opening so that fluid can flow through the container by way of the ends, means within the container for measuring the rate of flow of fluid through the container and means for reducing fluid pressure within the container while fluid is flowing through the container.

2. Apparatus as claimed in claim 1 in which the means for reducing fluid pressure within the container is adapted to reduce the pressure substantially to atmospheric.

3. Apparatus as claimed in claim 1 or claim 2 in which the means for reducing fluid pressure within the container is a fan for aiding the flow rate of fluid through the container.

4. Apparatus as claimed in any of the preceding claims in which means is provided for measuring the pressure and means are provided for adjusting the fan speed to maintain the pressure substantially at atmospheric.

5. Apparatus as claimed in any of claims 1 to 4 in which the means for measuring the rate of flow of fluid through the container is an anemometer.

6. Apparatus as claimed in claim 5 in which the anemometer is a vane anemometer.

7. Apparatus as claimed in any of claims 4 to 6 in which the means for measuring the pressure is a manometer.

8. Apparatus as claimed in any of the preceding claims in which the pressure reducing means is situated adjacent to an outlet end of the container.

9. Apparatus as claimed in any of the preceding claims in which the flow rate measuring means is situated between the ends of the container.

10. Apparatus as claimed in any of the preceding claims in which a first temperature measuring means is situated adjacent to the fluid flow rate measuring means.

11. Apparatus as claimed in any of the preceding claims in which a second temperature measuring means is located adjacent an inlet end of the container.

12. Apparatus as claimed in any of the preceding claims in which the container comprises a chamber divided by a wall into two communicating compartments with one compartment providing an inlet end and the other compartment an outlet end with the fluid flow rate measuring means located adjacent an opening in the dividing wall.

**13.** Apparatus as claimed in claim 13 in which the compartments comprise two substantially similarly sized cuboid chambers.

**14.** Apparatus as claimed in any of the preceding claims in which the container comprises at least two interconnectable parts.

**15.** Apparatus as claimed in claim 14 in which a part containing the open end has a mouth forming the opening and a throat opposite the mouth, which throat is connectable to an adjoining part of the container and the mouth has a greater area than the throat.

**16.** Apparatus substantially as hereinbefore described with reference to the drawings.

FIG.1.

# FIG.2.

# FIG. 3.

FIG.4.

FIG.5.